# EUROPÄISCHE PATENTANMELDUNG

(11) **EP 0 619 661 A1**
(43) Veröffentlichungstag der Anmeldung: **12.10.1994**
(21) Anmeldenummer: 94200725.3
(22) Anmeldetag: 21.03.1994
(51) Int. Cl.: H04L 12/26

(54) **Belastungsprüfung einer ATM-Vermittlungsstelle**

(30) Priorität: 08.04.1993 CH 1072/93
(71) Anmelder: Alcatel STR AG, CH-8055 Zürich (CH)
(72) Erfinder: Grünenfelder, Reto, Dr., CH-8305 Dietlikon (CH)

(57) **Zusammenfassung**

Eine Vermittlungseinheit (1) für die Durchschaltung verschiedener Arten von digitalen Daten im asynchronen Uebermittlungsverfahren, ein sogenannter ATM-Switch, soll daraufhin geprüft werden, ob sie eine spezifizierte Last zu bewältigen vermag. Die Einrichtung sieht Rückführungen (4) von Ausgängen (2) zu Eingängen (3) vor, über die Grundlast-Datenzellen, die von einem Generator (5) an einem Eingang (35) eingespeist werden, auf Grund ihrer Leitangaben ständig zirkulieren. Der Generator (5) gibt auch Testzellen aus. An einem Messausgang (21) ist ein Diskriminator (6) in die Rückführung (41) eingeschaltet. Er ist in der Lage, gewisse Inhalte der Datenzellen zu lesen, zu verändern, zu kopieren oder zu unterdrücken. Er leitet die Zellen zurück oder/und über einen zweiten Ausgang and einen Analysator (7), der diese statistisch auswertet. Das Verfahren sieht vor, in einem ersten Schritt sukzessive und kontrolliert Datenzellen einzuspeisen, bis eine bestimmte Grundlast erreicht ist, und in einem zweiten Schritt die Grundlast zu modulieren, indem einzelne Zellen umgeleitet und Testzellen überlagert werden. Auftretende Instabilitäten infolge Ueberlast können so unmittelbar wieder unter Kontrolle gebracht werden.

## Beschreibung

Die Erfindung liegt auf dem Gebiet des Testens von Vermittlungsanlagen und betrifft den Lasttest einer Schaltstelle für das asynchrone Vermitteln strukturierter digitaler Daten, insbesondere Datenzellen.

Mit dem weltweiten Ausbau der integrierten Nachrichtennetze für Breitbandanwendungen entstehen immer mehr Vermittlungszentren für die Durchschaltung der verschiedenen Arten von digitalen Daten im asynchronen Uebermittlungsverfahren (Asynchronous Transfer Mode - ATM) gemäss einer CCITT-Empfehlung. Die eigentliche ATM-Vermittlungseinheit nimmt an ihrer Vielzahl von Eingängen die willkürlich eintreffenden, markierten Datenzellen entgegen, markiert sie um und leitet sie an den geeigneten ihrer vielen Ausgänge weiter, so dass die jeweilige Datenzelle raschmöglichst an ihrer Destination ankommt. Bei zu hohem Verkehrsaufkommen kann es trotz Pufferspeichern zu Zellverlusten und somit auch Datenverlusten kommen. Eine Vermittlungseinheit muss daher daraufhin geprüft werden, ob sie die spezifizierte Last zu bewältigen vermag.

Gängiges Mittel für die Lastprüfung sind sogenannte Bench-Mark-Tests, das sind definierte, speziell generierte Eingangssignale, die ein bestimmtes Resultat erwarten lassen. Abweichungen ergeben eine Aussage über die Funktionstüchtigkeit des Prüflings. Wegen der Vielzahl von Ein- und Ausgängen ist eine individuelle Ansteuerung aller Eingänge und Messung aller Ausgänge wirtschaftlich nicht machbar - für jeden zu beaufschlagenden Eingang wir eine Sendeeinheit, für jeden zu messenden Ausgang eine Empfangseinheit benötigt. Es ist daher üblich, nur einen oder wenige Ein- und Ausgänge mit dem Bench-Mark-Signal zu testen. Damit gleichwohl eine Grundlast vorhanden ist, wird an mindestens einem weiteren Eingang ein Grundlastsignal, das von einem separaten Generator stammt, eingespiesen. Dieses ist so markiert, dass es von einem Eingang an den gleich numerierten Ausgang vermittelt wird. Die nicht am Bench-Mark-Test beteiligten Ausgänge werden je an den nächstfolgenden Eingang zurückgeführt, so dass die Grundlast sukzessive all diese Ein- und Ausgänge durchläuft. Derart wird zusätzlicher Verkehr simuliert. Dem Vorgehen haftet aber der Nachteil an, dass auftretende Fehler, z. B. infolge Ueberlastung oder bewusster Einspeisung, sich schubweise fortsetzen und es schwer fällt, definierte Zustände einzuhalten, die eine Auswertung des Test-Signals erlauben.

Es besteht daher die Aufgabe, ein Verfahren und eine Anordnung zu finden, mit deren Hilfe eine ATM-Vermittlungseinheit mit geringem Aufwand gezielt bis über die Grenze ihres fehlerfreien Funktionierens belastet und eine Ueberlast erfasst und ausgewertet werden kann.

Die Aufgabe wird durch die kennzeichnenden Merkmale der Patentansprüche 1 und 6 gelöst. Vorteilhafte Ausgestaltungen ergeben sich aus den zugehörigen Unteransprüchen.

Die Lösung sieht vor, in einem ersten Verfahrensschritt kontrolliert eine bestimmte Grundbelastung für die Vermittlungseinheit nahe der Lastgrenze aufzubauen. An der Vermittlungseinheit ist zu diesem Zweck jeder Ausgang an einen nicht anderweitig gebrauchten Eingang physisch zurückverbunden - überzählige Ein- oder Ausgänge bleiben unbenutzt. Ein Signalgenerator speist an einem weiteren Eingang - es könne auch mehrere Generatoren an mehreren Eingängen sein - sukzessive Grundlast-Datenzellen ein, die individuell so markiert sind, dass sie fortan auf immer demselben Weg umlaufen, bevorzugt über einen einzigen Einund Ausgang. An einem bestimmten Ausgang, dem Messausgang, ist ein Diskriminator in die Rückführung eingeschaltet und ein Signalauswerter angeschlossen. Die Messung erlaubt in diesem ersten Verfahrensschritt festzustellen, wie gross die Last ist und ob stabile Verhältnisse vorhanden sind. Dank der symmetrischen Lastverteilung auf alle beteiligten Ausgänge genügt es, an einem einzigen Ausgang zu messen.

Wenn eine bestimmte Grundlast erreicht ist, wird in einem zweiten Verfahrensschritt vom nämlichen Signalgenerator am selben Eingang eine Testsequenz eingespeist. Diese läuft auf einem durch die Markierung der Zellen gegebenen Pfad zum Messausgang, wo sie durch den Diskriminator ausgeschieden und dem Signalauswerter zugeführt wird. Die Messresultate, insbesondere die relativen Ankunftszeiten der Zellen und allfällige Fehler in der Uebermittlung geben Aufschluss über das Funktionieren der Einheit.

In einer bevorzugten Ausführungsvariante enthält die Testsequenz Leitwegzellen, welche den konfigurierten Weg für einzelne Datenzellen der Grundlast vorübergehend ändern und diese auf den Messausgang leiten. Der Diskriminator beeinflusst diese Zellen und schickt sie über die Rückführung an deren ursprünglichen Ausgang zurück. Auf diese Weise lässt sich die Grundlast gezielt modulieren.

In einer weiteren Ausführungsvariante sorgt eine Fehlerhäufungserkennung im Diskriminator über eine Rückführung zum Signalgenerator dafür, dass ein allenfalls aufgetretener instabiler Zustand wieder stabilisiert werden kann.

Die Erfindung ist anhand zweier Figuren näher beschrieben. Es zeigen:
- Fig. 1:: Die prinzipielle Anordnung der Einrichtung für den Belastungstest einer Vermittlungseinheit;
- Fig. 2:: Ein Flussdiagramm der Abläufe des erfinderischen Verfahrens für den Belastungstest einer Vermittlungseinheit.

Um die Erfindung besser verstehen zu können, wird zunächst die Funktion des nachmaligen Prüflings, einer Vermittlungseinheit für die Durchschaltung von digitalen Daten im asynchronen Uebermittlungsverfahren, kurz ATM-Switch genannt, prinzipiell erläutert. Details eines solchen ATM-Switchs brauchen nicht bekannt zu sein, sofern die Konventionen eingehalten sind. Er hat festgelegte Ein- und Ausgänge für den Empfang und das Aussenden von Signalen, die digitale Daten in Form normierter Datenzellen tragen. Datenzellen bestehen im wesentlichen aus einem Zellkopf, in dessen einem Feld (VPI/VCI) die Markierungen für die lokale Durchschaltung stehen, und dem Informationsfeld, das die Nutzdaten enthält. Die Zellen werden gepuffert. Der Zellkopf wird analysiert und ummarkiert. Switchinterne Konfigurationsvorgaben zusammen mit den Markierungsdaten des Zellkopfs sind ausschlaggebend dafür, an welchen Ausgang und mit welcher neuen Markierung die Zelle weitergeleitet wird. Die Nutzdaten bleiben unverändert. Die Nutzdaten einer im Zellkopf entsprechend gekennzeichneten Art von Zellen jedoch, den Leitwegzellen, werden im Switch selber wirksam und beeinflussen die Konfigurationsvorgaben. Der ATM-Switch leitet also die Datenzellen nach darin enthaltenen Angaben und den vorhandenen, allenfalls von Leitwegzellen beeinflussten Konfigurationsvorgaben weiter.

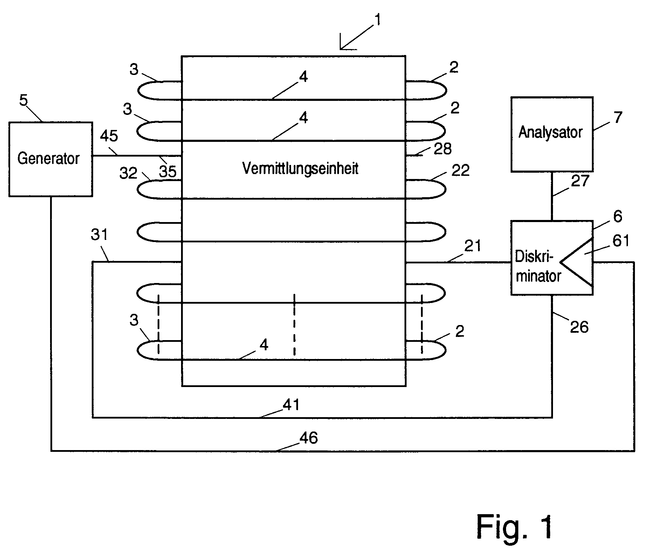

Die Figur 1 zeigt einen solchen ATM-Switch 1 als Prüfling. Derartige Vermittlungseinheiten haben üblicherweise mehrere Hundert bis einige Tausend Ein- und Ausgänge. Die Sende- und Empfangseinheiten sind relativ teuer, insbesondere wenn Lichtwellenleiter als Uebertragungsmedium eingesetzt sind, was für integrierte Netze für Breitbandanwendungen Standard ist. Eine Prüfvorrichtung soll daher mit wenig solchen Einheiten auskommen. Die Prüfanordnung sieht vor, die Ausgänge 2 an die Eingänge 3 zurückzuführen. Auf diese Weise werden lediglich Verbindungen 4, üblicherweise steckbare, konfektionierte optische Fasern, und keine zusätzlichen Sende- und Empfangseinheiten benötigt und trotzdem können laufend Datenzellen gesendet und empfangen werden.

In der Figur 1 sind die Ein-/Ausgangsverbindungen 4 schematisch parallel verlaufend gezeichnet. Damit wird ein Ordnungsprinzip der logischen Verbindung angedeutet, das für die weiter hinten beschriebene Durchführung des Tests von Bedeutung ist: Datenzellen zirkulieren von einem bestimmten Eingang 32 zu einem bestimmten Ausgang 22 und von diesem zum bestimmten Eingang 32 zurück. Selbstverständlich spielt es physisch aber keine Rolle, welcher Ausgang 2 mit welchem Eingang 3 verbunden ist, solange die Leitwegtabelle beziehungsweise allgemeiner die Konfiguration im Switch bewirkt, dass eine Datenzelle ständig über dieselben Ein- und Ausgänge zirkuliert.

Der logische Kreis vom Eingang 31 zum Ausgang 21 und über die Verbindung 41 zurück zum Eingang 31 ist allen andern Kreisen gleichwertig. Die Rückführung 41 zeichnet sich aber durch den in sie eingeschalteten Diskriminator 6 besonders aus. Der Diskriminator 6 ist in der Lage, gewisse Inhalte der Datenzellen zu lesen, und sie auf Grund dieser Information zu verändern, zu kopieren oder zu unterdrücken und an einen seiner beiden Ausgänge weiterzuleiten, den Testkreisausgang 26 oder/und den Messzweigausgang 27. An letzterem ist der Analysator 7 angeschlossen, der die ankommenden Datenzellen statistisch auswertet.

Ein Generator 5 ist über eine Leitung 45 an einen Generatoreingang 35 an den Prüfling angeschlossen. Er sendet durch den Test vorgegebene Datenzellen an den Generatoreingang 35, der ein beliebig ausgewählter Eingang sein kann. Die Anordnung liesse sich durch weitere Generatoren ergänzen, z. B. um gleichzeitig und unabhängig voneinander verschiedene Protokolle im Sinn eines Multi-Media-Tests anzuwenden.

In einer erweiterten Ausgestaltung enthält der Diskriminator 6 eine Auswerteeinheit 61, welche das Auftreten von Fehlern in Datenzellen feststellt. Eine Verbindung 46 vom Diskriminator 6 zum Generator 5 dient dazu, den Generator automatisch zu beeinflussen, wenn die vom Diskriminator gelesene Information dies wünschbar erscheinen lässt, zum Beispiel, wenn Fehler aufgetreten sind, die auf eine Ueberlast schliessen lassen.

Bei ungleicher Anzahl von Ein- und Ausgängen am Switch wird mit Vorteil die kleinere Zahl voll belegt, die restlichen bleiben unbenützt, wie z. B. der Ausgang 28 in der Figur 1.

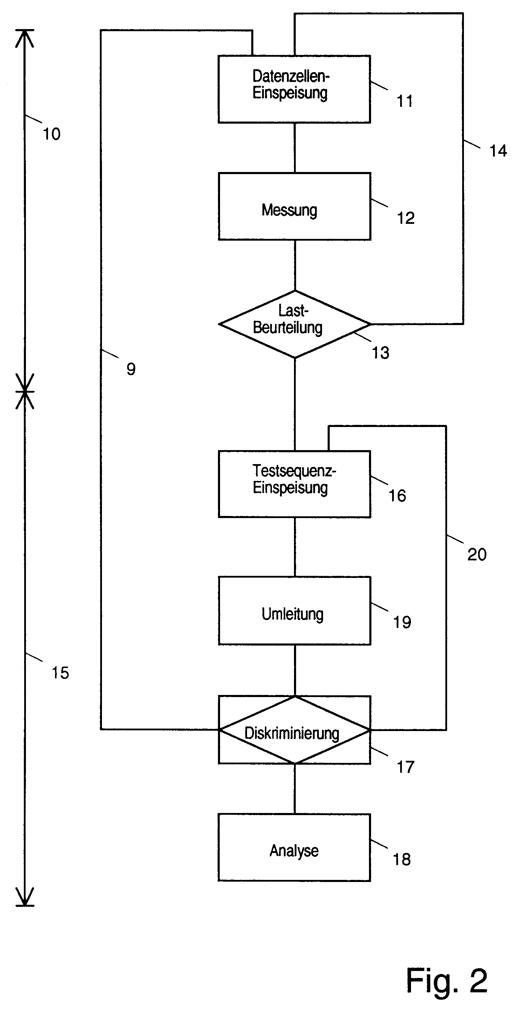

Generatoren und Analysatoren für die Simulation und Messung des Verkehrs auf Leitungen sind bekannt. In der gezeigten Anordnung im Zusammenspiel mit dem Diskriminator ermöglichen sie ein Testen eines ATM-Switchs mit einer Grundlast an der Grenze der Leistungsfähigkeit und einer gezielten Modulation der Last. Das Verfahren zur Belastungsprüfung auf diese Weise wird nun anhand des Flussdiagramms von Figur 2 erläutert.

In einem ersten Schritt 10 wird der Prüfling gezielt belastet indem sukzessive Datenzellen eingegeben werden, bis die erforderliche Last erreicht ist. In einem zweiten Schritt 15 wird eine Testsequenz eingespiesen und vermessen und gleichzeitig die Grundlast moduliert. Die Auswirkung auf die Testsequenz wird analysiert.

Als eine erste Aktion 11 werden an einem beliebigen Eingang des Prüflings Datenzellen eingespeist, je eine für jeden Ausgang, an den eine Rückführung an einen Eingang angeschlossen ist. Die Zellen tragen also individuelle Markierungen im Zellkopf, genauer im Referenzfeld mit dem "Virtual Path Identifier" und dem "Virtual Channel Identifier" (VPI/VCI). Diese bewirken, dass die Zelle immer an ihren vorbestimmten Ausgang gelangt. Wegen der Rückführung zirkuliert sie ständig. Als Besonderheit enthalten diese Grundlastzellen im Nutzdatenteil Information über den zugeordneten Ausgang ebenfalls. Weiter enthalten die Zellen eine Zuordnungsnummer, die beim Generieren der Grundlastzellen in einer fortlaufenden Reihenfolge vergeben werden. Diese Zuordnungsnummer ermöglicht es, auftretende Fehler, namentlich Zellverluste, festzustellen.

An einem frei gewählten Ausgang wird laufend eine Messung 12 vorgenommen. Sie bestimmt als gleitendes Mittel die Last und die zeitlichen Zellabstände, die zusammen ein direktes Mass für die Stabilität des Datenverkehrs auf der Vermittlungseinheit sind. Wegen der gleichmässigen Verteilung der zirkulierenden Datenzellen auf alle Ein- und Ausgänge genügt es, an einer Stelle zu messen. Sobald die Schwankung der beiden Messwerte innerhalb vorgegebener Grenzen bleibt, wird eine Beurteilung 13 daraufhin vorgenommen, ob die gemessene Last noch kleiner ist als die spezifizierte Last, die erreicht werden soll. Gegebenenfalls - in der Figur 2 durch die Schleife 14 angedeutet - wird die erste Aktion 11 samt den anschliessenden Messungen 12 und der Beurteilung 13 wiederholt. Andernfalls ist das erste Ziel erreicht, das heisst der Prüfling ist unter einer hohen Grundbelastung in einem stabilen Zustand, und es wird zum zweiten Schritt 15 übergeleitet.

Am beliebigen Eingang wird nun als weitere Aktion 16 eine Testsequenz eingespeist, die direkt oder über mehrere Umläufe an den frei gewählten Ausgang gelangt, an dem gemessen wird. Die Testsequenz kann von demselben Generator erzeugt werden wie die Grundlast, die als erste Aktion 11 eingespeist wird. Die Messung 12 ist jetzt erweitert durch eine Diskriminierung 17 zwischen Datenzellen der Testsequenz und jener der Grundlast. Erstere werden abgezweigt und einer Analyse 18 zugeführt, letztere wie gewohnt zurückgeführt. Die Testsequenz bringt eine Zusatzlast, die eine Störung des Gleichgewichts zur Folge haben könnte. Das Messresultat gibt Aufschluss darüber.

Von besonderem Interesse ist jedoch festzustellen, was mit der Testsequenz passiert, wenn gleichzeitig die Grundlast eine Aenderung erfährt. Eine weitere Aktion 19 besteht daher darin, einzelne zirkulierende Zellen der Grundlast für einen oder mehrere Umläufe umzuleiten. Dies wird durch Leitwegzellen innerhalb der Testsequenz bewerkstelligt, die vorübergehend den Leitweg von einem gewissen Eingang auf den frei gewählten Ausgang der Testsequenz legt. In betroffenen Grundlastzellen wird währenddessen zwangsläufig die VPI/VCI-Markierung im Zellkopf verändert. Die Diskriminierung 17 kopiert jedoch sofort wieder aus den Nutzdaten dieser Grundlastzelle die ursprüngliche Markierung und überschreibt damit die Markierung im Kopf. Die Zelle kehrt in der Folge über die Rückführung und den zugeordneten Eingang durch den Switch hindurch zu ihrem angestammten Ausgang zurück. Symbolisch betrachtet läuft sie statt in ihrem angestammten Kreis auf einer Achterschlaufe, bis erneut Leitwegzellen die Leitwegänderung rückgängig machen. Normalerweise geschieht dies bereits nach einem Umlauf, damit kein signifikantes Ungleichgewicht in der Grundlast entsteht.

Wird anlässlich der Diskriminierung 17 festgestellt, dass sich Fehler häufen, was auf Grund der Zuordnungsnummer in der Nutzlast geschehen kann, so lässt sich diese Feststellung dazu benützen, die Testsequenz zu steuern und nötigenfalls zu stoppen. Die entsprechende Beeinflussung ist in der Figur 2 durch die Rückmeldung 20 dargestellt. Genügt dies noch nicht, um wieder zum stabilen Zustand unter hoher Grundlast zurückzukehren, kann die Diskriminierung 17 so weit gehen, auch Grundlastzellen auszuscheiden, bis Stabilität erreicht ist. Die Grundlast muss anschliessend wieder hochgefahren werden, was durch eine Rückkehr 9 zum bekannten ersten Schritt 10 geschieht. Fehler können durch auf Daten im Zellkopf angewandte Prüfroutinen festgestellt werden.

Das geschilderte Verfahren lässt sich auf mehr als einen frei gewählten Ausgang gleichzeitig anwenden, wobei allerdings auch die Diskriminierung 17 mehrfach vorzunehmen ist.

## Patentansprüche

1. Verfahren zur Belastungsprüfung einer Vermittlungseinheit für digitale Daten mit Zellstruktur, die auf Grund ihrer mitgeführten Leitangaben im asynchronen Uebermittlungsverfahren durchgeschaltet werden, das die Vermittlungseinheit durch eine Grundlast zirkulierender Datenzellen vorbelastet und gleichzeitig durch Testdaten belastet, dadurch gekennzeichnet, dass in einem ersten Schritt (10) sukzessive Datenzellen eingespeist werden, die je zwischen einem durch den Zellinhalt vorgebbaren Ein- und Ausgang der Vermittlungseinheit umlaufen, bis eine bestimmte Grundlast erreicht ist, und in einem zweiten Schritt (15) Testsequenzen an mindestens einen Ausgang überlagert werden, die über eine Diskriminierung (17) an diesem mindestens einen Ausgang von den Datenzellen der Grundlast getrennt und einer Analyse (18) zugeführt werden.

2. Verfahren nach Anspruch 1, dadurch gekennzeichnet, dass die Testsequenz Leitwegzellen enthält, welche den Leitweg in der Vermittlungseinheit für eine oder mehrere der zirkulierenden Datenzellen ändert und solcherart die Grundlast moduliert.

3. Verfahren nach einem der Ansprüche 1 oder 2, dadurch gekennzeichnet, dass die Diskriminierung (17) Vermittlungsfehler feststellt und die Testsequenzen so beeinflusst, dass bei Häufung der Fehler die Last zurückgenommen wird.

4. Verfahren nach Anspruch 3, dadurch gekennzeichnet, dass die Diskriminierung (17) überdies Datenzellen der Grundlast aus dem Umlauf ausscheidet, bis die Fehlerhäufung verschwindet, und anschliessend zum ersten Schritt (10) zurückgekehrt wird, um die bestimmte Grundlast erneut aufzubauen.

5. Verfahren nach einem der vorstehenden Ansprüche, dadurch gekennzeichnet, dass Grundlast und Testsequenz am selben Eingang eingespeist werden.

6. Einrichtung für die Belastungsprüfung einer Vermittlungseinheit (1) für digitale Daten mit Zellstruktur, die auf Grund ihrer mitgeführten Leitangaben im asynchronen Uebermittlungsverfahren durchgeschaltet werden, mit einer Vielzahl von Signalverbindungen (4) jeweils von einem Ausgang (2) der Vermittlungseinheit (1) zu einem Eingang (3) derselben, gekennzeichnet durch mindestens einen an einem Eingang (35) der Vermittlungseinheit (1) anschliessbaren Signalgenerator (5), der sowohl sukzessive Grundlastdaten für alle Ausgänge (2, 21, 22) liefert, die infolge der jeweiligen Verbindungen (4, 41) von Ausgang (2, 21, 22) zu Eingang (3, 31, 32) anschliessend laufend durch die Vermittlungseinheit (1) zirkulieren, als auch Testdaten für die Weiterleitung an einen Messausgang (21) liefert, einen Signalauswerter (7) für die am Messausgang (21) erscheinenden Testdaten und einen in die Signalverbindung (41) vom Messausgang (21) zum zugehörigen Eingang (31) eingeschalteter Diskriminator (6), der Grundlastdaten von Testdaten trennt, die ersteren zum Eingang (31) zurückleitet und die letzteren an den Signalauswerter (7) auskoppelt.

7. Einrichtung nach Anspruch 6, gekennezeichnet durch eine Auswerteeinheit (61) im Diskriminator (6), die Fehler in den Datenzellen detektiert, und einer zusätzlichen Rückführung (46) vom Diskriminator (6) zum Signalgenerator (5), über die der Signalgenerator (5) in Abhängigkeit der vom Diskriminator (7) detektierten Fehler gesteuert wird.
